# EUROPÄISCHE PATENTSCHRIFT

(11) **EP 2 015 956 B1**
(45) Veröffentlichungstag und Bekanntmachung des Hinweises auf die Patenterteilung: **05.09.2018**
(21) Anmeldenummer: 07728901.5
(22) Anmeldetag: 08.05.2007
(51) Int. Cl.: B60L 13/00, H02H 7/30, H02J 3/00

(54) **ERFASSUNG UND BEGRENZUNG MAXIMALER STATORSTRÖME**
DETECTION AND DELIMITATION OF MAXIMUM STATOR CURRENTS
SAISIE ET LIMITATION DE FLUX DE STATOR MAXIMAUX

(30) Priorität: 11.05.2006 DE 102006023324
(43) Veröffentlichungstag der Anmeldung: 21.01.2009
(73) Patentinhaber: Siemens Aktiengesellschaft, 80333 München (DE)
(72) Erfinder: ENGEL, Markus, 90469 Nürnberg (DE)
(86) Internationale Anmeldenummer: PCT/EP2007/054448
(87) Internationale Veröffentlichungsnummer: WO 2007/131915

(56) Entgegenhaltungen:
- DE-A1- 10 139 318
- US-B1- 6 320 731
- BLANK K ET AL: "ANTRIEB UND ENERGIEVERSORGUNG DES TRANSRAPID PROPULSION SYSTEM AND POWER SUPPLY FOR THE TRANSRAPID" ZEVRAIL - GLASERS ANNALEN, GEORG SIEMENS VERLAG, BERLIN, DE, Bd. 127, Oktober 2003 (2003-10), Seiten 70-82,84, XP001172194 ISSN: 1618-8330

## Beschreibung

Die Erfindung betrifft eine Vorrichtung zum Antrieb einer Magnetschwebebahn mit wenigstens einer regelbaren Energieversorgungseinheit, die zum Speisen wenigstens einer mehrphasigen Energieversorgungsleitung eingerichtet ist, und mit einem Langstator, der sich in Schaltabschnitten des Langstators erstreckende Statorwicklungen aufweist, wobei jeder Schaltabschnitt über einen zugeordneten Abschnittseinspeiseschalter an wenigstens eine der Energieversorgungsleitungen anschließbar ist, und wobei jeder Statorwicklung wenigstens ein Stromgeber zur Erfassung eines Stromes und eine mit dem Stromgeber verbundene Auswerteeinheit zugeordnet ist.

Eine solche Vorrichtung ist aus dem Sonderdruck ZEV Glasers Annalen, Sonderheft "Transrapid 2003" bereits bekannt. In dem besagten Sonderheft ist eine Magnetschwebebahn mit einem Antrieb beschrieben, wobei der Antrieb einen Linearmotor mit einem sich längs der Fahrbahn erstreckenden Stator aufweist, der in Schaltabschnitte unterteilt ist. Zum Antrieb einer Magnetschwebebahn sind die Schaltabschnitte zeitlich nacheinander mit einer elektrischen Energieversorgung verbindbar. Hierzu sind den Schaltabschnitten Einspeiseschalter zugeordnet. Durch Einschalten der Einspeiseschalter wird die Energieversorgung mit dem zugeordneten Schaltabschnitt verbunden. Jeder Statorwicklung ist ferner wenigstens ein Stromgeber zur Erfassung eines Stromes und eine mit dem Stromgeber verbundene Auswerteeinheit zugeordnet. Die besagte Stromerfassung ist zur Erfassung eines Erdschlusses eingerichtet. Aus diesem Grunde wird ein Summenstrom aus allen Phasenströmen der mehrphasigen Energieversorgungsleitung erfasst. Im ungestörten Zustand ist der Summenstrom auf Grund einer symmetrischen Belastung der Phasen der Energieversorgungsleitung gleich Null. Im Erdschlussfall liegt jedoch eine unsymmetrische Stromverteilung vor, mit einem von Null abweichenden Summenstrom im Gefolge. Übersteigt der Summenstrom daher einen parametrisierbaren Schwellenwert, löst die Auswerteeinheit den zugeordneten Einspeiseschalter aus, so dass die Energieversorgung vom fehlerhaften Statorabschnitt getrennt wird.

Der Überstromschutz des Antriebs einer Magnetschwebebahn erfolgt hingegen gemäß dem Stand der Technik durch Festlegen von Stromgrenzwerten bei der Stromregelung. Die Motorsteuerungen und die Umrichtersteuerungen verfügen daher über Stromschwellenwerten, die verschiedenen Randbedingungen zugeordnet sind. Zunächst sind die Schwellenwerte von der jeweils verwendeten Umrichterleistungsklasse abhängig. Darüber hinaus ergeben sich für den Schwellenwert Unterschiede hinsichtlich der Umrichterbetriebsart. In der so genannten Direkttaktbetriebsart und dem so genannten Trafobetrieb sind unterschiedlich große Ströme möglich, so dass zusätzliche Schwellenwerte festgelegt werden müssen. Unterschiedliche Speisebetriebsarten, wie beispielsweise Einfach- und Doppeleinspeisung, erhöhen die Komplexität des Überstromschutzes noch weiter. In der Regel ergibt sich daher eine relativ unübersichtliche Matrix von Schwellenwerten, auf die in Abhängigkeit der Regelungsart von der Motor- und Umrichterregelung zugegriffen wird. Aus der Komplexität des Überstromschutzes ergeben sich ungünstige Konstellationen, wie beispielsweise ein relativ langer Anschlussfahrweg und eine verringerte betrieblich nutzbaren Maximalgeschwindigkeit der Magnetschwebebahn.

Aus der DE 101 39 318 A1 sind ein Verfahren und eine Anordnung zur Fehlererkennung in einem elektrischen Strahlennetz bekannt. Hierbei ist eine Energieversorgung in Form eines Umrichters über ein mehrphasiges Energieversorgungsnetz mit einem Langstator verbunden, der Statorwicklungen aufweist, die sich entlang des Langstators erstrecken. Die zur Stromerfassung in dem Strahlennetz vorgesehenen Stromgeber sind zwischen der Energieversorgungsleitung und einem Abschnittseinspeiseschalter angeordnet, welcher das Energieversorgungskabel mit der jeweiligen Statorabwicklung verbindet oder den Stromfluss unterbricht. Auf diese Weise kann das gesamte Strahlennetz global überwacht werden.

Die US 6,320,731 B1 beschreibt ebenfalls ein Verfahren und eine Anordnung zur Fehlerüberwachung bei einem Motorantrieb.

Aufgabe der Erfindung ist es eine Vorrichtung der eingangs genannten Art bereitzustellen, die sowohl einen einfachen als auch einen genauen Überstromschutz ermöglicht.

Die Erfindung löst diese Aufgabe dadurch, dass jeder Stromgeber zur Erfassung des Stromes in einer Phase der jeweils zugeordneten Statorwicklung eingerichtet und zwischen dem Abschnittseinspeiseschalter und der Statorwicklung angeordnet ist, wobei die Auswerteeinheit bei Überschreiten des jeweils erfassten Stromes eines zuvor festgelegten Schwellenwertes zum Abschalten des Abschnitteinspeiseschalters eingerichtet ist.

Erfindungsgemäß wird der Überstrom nicht mehr in unmittelbarer Umgebung der zu regelnden Energieversorgungseinheit erfasst. Vielmehr ist vorgesehen, die Erfassung und Begrenzung der maximal möglichen Antriebsströme an jedem Schaltabschnitt zu installieren. Erfindungsgemäß wird daher der in dem gerade zugeschalteten Schaltabschnitt fließende Strom direkt erfasst, wobei die zugeordnete Auswerteeinheit dafür sorgt, dass bei Überschreitung eines Schwellenwertes der zugeordnete Abschnitteinspeiseschalter unabhängig von der Regelung jeder Energieversorgungseinheit ausgeschaltet wird, so dass der fehlerhafte Schaltabschnitt von der Energieversorgung abgekoppelt ist. Der Schwellenwert kann daher dicht über den betrieblich maximal erforderlichen Statorstrom eingestellt werden. Durch die Zuordnung zum jeweiligen Schaltabschnitt ergibt sich darüber hinaus die Möglichkeit einer ortsabhängigen Parametrisierung. So kann beispielsweise in Schaltabschnitten, in denen nur eine geringe betriebliche Beschleunigung oder Verzögerung erforderlich ist, der Schwellenwert entsprechend herabgesetzt werden. Beispielweise umfassen die Stromgeber Einspeisestromgeber, die in unmittelbarer Nähe des Abschnitteinspeiseschalters angeordnet sind. Die Einspeisestromgeber sind somit in der Nähe der Fahrbahn, also des Stators, der Magnetschwebebahn angeordnet. Auswerteeinheit und Abschnittseinspeiseschalter sind somit räumlich nahe beieinander aufgestellt, längere Kommunikationswege sind daher überflüssig geworden.

Ferner umfassen die Stromgeber erfindungsgemäß Sternpunktstromgeber, die in unmittelbarer Nähe des Sternpunktes der jeweils zugeordneten Statorwicklung angeordnet sind. Sind neben den Sternpunktstromgebern auch Einspeisestromgeber vorgesehen, die ebenfalls mit einer Auswerteeinheit zusammenwirken, ist eine redundante Überstromerfassung bereitgestellt. In diesem Fall sind die Auswerteeinheiten beispielsweise miteinander verbunden, wobei eine Auswerteeinheit als so genannte Masterauswerteeinheit im Normalbetrieb den Überstromschutz übernimmt. Die andere Auswerteeinheit arbeitet als so genannter Slave. Im Fehlerfall der Master-Auswerteeinheit schaltet diese oder eine übergeordnete Steuerungsebene auf die Slave-Auswerteeinheit um, die dann den Überstromschutz übernimmt.

Die Vorrichtung weist Abschnittssternpunktschalter am Sternpunkt der Statorwicklung auf. Gemäß dieser vorteilhaften Weiterentwicklung sind auch die Schalter redundant ausgelegt, so dass beim Ausfall eines Schalters die Statorwicklung durch den noch intakten Schalter sicher von der Energieversorgungsleitung getrennt werden kann. Weiterhin weist die erfindungsgemäße Vorrichtung eine erste Auswerteeinheit auf, welche zum Auslösen des Abschnitteinspeiseschalters eingerichtet ist und eine zweite Auswerteeinheit zum Auslösen des Abschnittssternpunktschalters.

Die Zuverlässigkeit des Überstromschutzes ist noch weiter erhöht, da die erfindungsgemäße Vorrichtung eine zweite Auswerteeinheit aufweist, welche zum Auslösen des Abschnitteinspeiseschalters eines nachfolgenden Schaltabschnittes eingerichtet ist.

Zweckmäßigerweise weist die erfindungsgemäße Vorrichtung eine erste Auswerteeinheit eines nachfolgenden Schaltabschnittes auf, welche zum Auslösen des Abschnittssternpunktschalters des vorausgehenden Schaltabschnittes eingerichtet ist. Auch diese Weiterentwicklung erhöht die Zuverlässigkeit des Überstromschutzes.

Vorteilhafterweise ist die Auswerteeinheit in ein Schutzgerät zur Schaltabschnittsfortschaltung und/oder Erdschlusswiderstandsüberwachung integriert. Gemäß dieser vorteilhaften Weiterentwicklung der Erfindung werden die Kosten der Überstromüberwachung noch weiter reduziert.

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei die
- Figur: ein Ausführungsbeispiel der Erfindung in einer schematischen Darstellung verdeutlicht.

Die Figur zeigt ein Ausführungsbeispiel der erfindungsgemäßen Vorrichtung 1, die einen figürlich nicht dargestellten Wechselrichter als Energieversorgungseinheit aufweist. Der Wechselrichter ist über einen Gleichstromkreis mit einem Gleichrichter verbunden, der wiederum über einen Transformator an ein speisendes Energieversorgungsnetz angeschlossen ist. Der nicht gezeigte Wechselrichter ist mit mehreren jeweils 3-phasigen Energieversorgungsleitungen 2 verbunden, wobei in der Figur aus Gründen der Übersichtlichkeit jede Energieversorgungsleitung mit nur einer Phase dargestellt ist.

Die Vorrichtung 1 umfasst weiterhin Statorwicklungen 3, die sich in Schaltabschnitten 4 eines Langstators erstrecken. Die Statorwicklungen 3 jedes Schaltabschnittes 4 sind über einen Abschnittseinspeiseschalter 5 mit der zugeordneten Energieversorgungsleitung 2 verbunden, wobei am Sternpunkt 6 der Statorwicklung 3 ein Abschnittssternpunktschalter 7 angeordnet ist.

Zum Erfassen eines über die Statorwicklung 3 fließenden Stromes ist zwischen jedem Abschnittseinspeiseschalter 5 und der Statorwicklung 3 ein Einspeisestromgeber 8a vorgesehen. Der Einspeisestromgeber 8a ist über eine Kommunikationsleitung 9 mit einer Auswerteeinheit 10 verbunden, welche die von dem Einspeisestromgeber übermittelten geeichten Stromsignale, die zu dem in der Statorwicklung fließenden Strom proportional sind, unter Gewinnung von Abtastwerten abtastet und die Abtastwerte anschließend unter Gewinnung von digitalen Stromwerten digitalisiert. Abweichend hiervon ist der Stromgeber als Analogwertgeber direkt an die Auswerteeinheit angeschlossen. Mittels einer in der Auswerteeinheit 10 abgelegten Logik werden die digitalen Stromwerte mit einem vorgegebenen parametrisierten Schwellenwert verglichen. Übersteigen die digitalen Stromwerte den Schwellenwert, veranlasst die Auswerteeinheit 10 das Öffnen des Abschnittseinspeiseschalters 5, so dass die Statorwicklung 3 von der Energiezufuhr durch die Energieversorgungsleitung 2 abgeschaltet ist.

Um ein möglichst sicheres Abschalten zu gewährleisten, ist am Sternpunkt 6 der Statorwicklung 3 ein Sternpunktstromgeber 11a vorgesehen, der mit einer weiteren Auswerteeinheit 12 zusammenwirkt, wobei die Auswerteeinheit 12 zum Auslösen des Schnittsternpunktschalters 7 eingerichtet ist. Die Auswerteeinheit 12 ist der Auswerteeinheit 10 entsprechend aufgebaut und vergleicht die aus den Signalen des Sternpunktstromgebers gewonnenen Strommesswerte mit einem parametrisierten Schwellenwert, so dass es bei Überschreiten des Schwellenwertes zu einem Abschalten der Statorwicklung 3 durch den Abschnittssternpunktschalter 7 kommt. Es sei an dieser Stelle darauf hingewiesen, dass die Auswerteeinheiten 10 und 12 auch in einer gemeinsamen Recheneinrichtung angeordnet sein können.

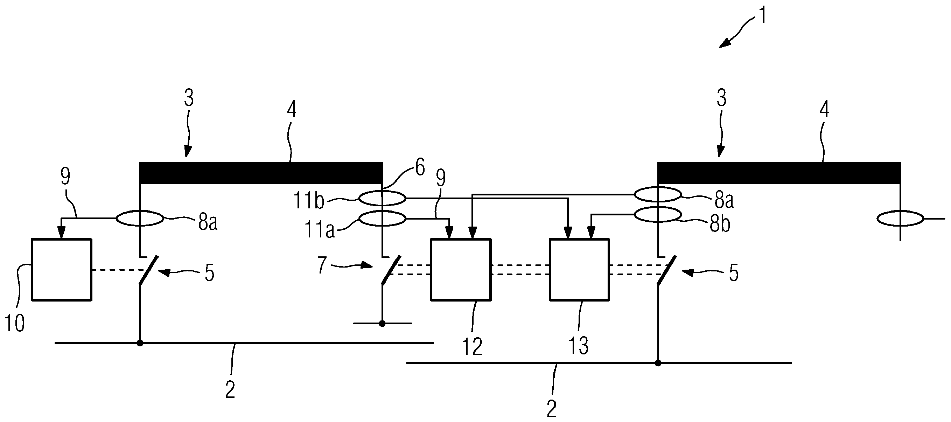

In Figur 1 ist eine weitere Möglichkeit zum redundanten Überstromüberschutz verdeutlicht. So ist es im Rahmen der Erfindung beispielsweise möglich, am Sternpunkt 6 jeder Statorwicklung 3 einen weiteren Abschnittssternpunktschalter 11b anzuordnen, der mit einer weiteren Auswerteeinheit 13 verbunden ist, wobei die Auswerteeinheit 13 mit dem Einspeisestromgeber 8a einer örtlich nachgeordneten Statorwicklung 3 verbunden ist. Die bereits beschriebene und mit dem Sternpunktstromgeber 11a verbundene Auswerteeinheit 12 ist darüber hinaus mit einem weiteren Stromgeber, nämlich dem Einspeisestromgeber 8b der örtlich nachgeordneten Statorwicklung 3 verbunden. Dabei sind die Auswerteeinheiten 12 und 13 jeweils sowohl zum Schalten des Abschnittssternpunktschalters 7 als auch des Abschnittseinspeiseschalters 5 der örtlich nachgeordneten Statorwicklung 3 eingerichtet. Auf diese Weise ist jede Auswerteinheit 12 beziehungsweise 13 in der Lage je nach dem, in welcher Statorwicklung 3 ein Überstrom festgestellt wird, ein Abschalten der fehlerbehafteten Statorwicklung 3 auszulösen. Durch diese redundante Auslegung ist der Überstromschutz noch weiter erhöht.

## Patentansprüche

1. Vorrichtung (1) zum Antrieb einer Magnetschwebebahn mit wenigstens einer regelbaren Energieversorgungseinheit, die zum Speisen wenigstens einer mehrphasigen Energieversorgungsleitung (2) eingerichtet ist, und mit einem Langstator, der sich in Schaltabschnitten (4) des Langstators erstreckenden Statorwicklungen (3) aufweist, wobei jeder Schaltabschnitt (4) über einen zugeordneten Abschnittseinspeiseschalter (5) an wenigstens eine der Energieversorgungsleitungen (2) anschließbar ist und wobei jeder Statorwicklung (3) wenigstens ein Stromgeber (8a,8b,11a,11b) zur Erfassung eines Stromes und wenigstens eine mit dem Stromgeber (8a,8b,11a,11b) verbundene Auswerteeinheit (10,12,13) zugeordnet ist, wobei jeder Stromgeber (8a,8b,11a,11b) zur Erfassung des Stromes in einer Phase der jeweils zugeordneten Statorwicklung (3) eingerichtet ist, wobei die Auswerteeinheit (10,12,13) bei Überschreiten des jeweils erfassten Stromes eines zuvor festgelegten Schwellenwertes zum Abschalten des Abschnitteinspeiseschalters (5) eingerichtet ist, wobei die Stromgeber Einspeisestromgeber (8a,8b) umfassen, die in unmittelbarer Nähe des Abschnittseinspeiseschalters (5) angeordnet sind, wobei die Vorrichtung Abschnittssternpunktschalter (7) am Sternpunkt (6) der Statorwicklung (3) aufweist, wobei jede Auswerteeinheit (10,12,13) in ein Schutzgerät zur Statorabschnittsfortschaltung und/oder Erdschlusswiderstandsüberwachung integriert ist,
**dadurch gekennzeichnet,**
**dass** jeder Stromgeber (8a, 8b, 11a, 11b) zwischen dem Abschnittseinspeiseschalter (5)und der Statorwicklung (3) angeordnet ist, wobei die Stromgeber Sternpunktstromgeber (11a, 11b) um fassen, die in unmittelbarer Nähe des Sternpunktes (6) der jeweils zugeordneten Statorwicklung (3) angeordnet sind, wobei eine erste Auswerteeinheit (10,13) zum Auslösen des Abschnitteinspeiseschalters (5) eingerichtet ist und eine zweite Auswerteeinheit (12) zum Auslösen des Abschnittssternpunktschalters (7) eingerichtet ist und die zweite Auswerteeinheit zum Auslösen des Abschnitteinspeiseschalters (5) eines nachfolgenden Schaltabschnittes (4) eingerichtet ist.

2. Vorrichtung nach Anspruch 1,
**dadurch gekennzeichnet, dass** die erste Auswerteeinheit (13) eines nachfolgenden Schaltabschnittes (4) zum Auslösen des Abschnittssternpunktschalters (7) des vorausgehenden Schaltabschnittes (4) eingerichtet ist.

## Claims

1. Apparatus (1) for driving a magnetic levitation rail road having at least one controllable power supply unit which is designed to feed at least one polyphase power supply line (2), and having an elongated stator which has stator windings (3) which extend in switching sections (4) of the elongated stator, wherein each switching section (4) can be connected via an associated section feed switch (5) to at least one of the power supply lines (2), and wherein each stator winding (3) is associated with at least one current sensor (8a, 8b, 11a, 11b) for detection of a current, and with at least one evaluation unit (10, 12, 13) which is connected to the current sensor (8a, 8b, 11a, 11b),
wherein
each current sensor (8a, 8b, 11a, 11b) is designed to detect the current in one phase of the respectively associated stator winding (3), wherein the evaluation unit (10, 12, 13) is designed to switch off the section feed switch (5) if the respectively detected current exceeds a previously defined threshold value, wherein the current sensors comprise feed current sensors (8a, 8b) which are arranged in the immediate vicinity of the section feed switch (5), wherein the apparatus has section star-point switches (7) at the star point (6) of the stator winding (3), wherein each evaluation unit (10, 12, 13) is integrated in a protective device for onward stator section switching and/or ground fault resistance monitoring, **characterized in that**
each current sensor (8a, 8b, 11a, 11b) is arranged between the section feed switch (5) and the stator winding (3), wherein the current sensors comprise star-point current sensors (11a, 11b) which are arranged in the immediate vicinity of the star point (6) of the respectively associated stator winding (3), wherein a first evaluation unit (10, 13) is designed to trip the section feed switch (5), and a second evaluation unit (12) is designed to trip the section star-point switch (7), and the second evaluation unit is designed to trip the section feed switch (5) of a subsequent switching section (4).

2. Apparatus according to Claim 1,
**characterized in that**
the first evaluation unit (13) of a subsequent switching section (4) is designed to trip the section star-point switch (7) of the preceding switching section (4).

## Revendications

1. Dispositif (1) d'entraînement d'un chemin de fer à sustentation magnétique, comprenant au moins une unité réglable d'alimentation en énergie, conçue pour alimenter au moins une ligne (2) polyphasée d'alimentation en énergie, et comprenant un stator long, qui a des enroulements (3) statoriques s'étendant dans des tronçons (4) de commutation du stator long, chaque tronçon (4) de commutation pouvant, par un interrupteur (5) associé d'alimentation de tronçon, être raccordé à au moins l'une des lignes (2) d'alimentation en énergie et dans lequel, à chaque enroulement (3) statorique, est associé au moins un capteur (8a, 8b, 11a, 11b) de courant pour détecter un courant et au moins une unité (10, 12, 13) d'exploitation reliée au capteur (8a, 8b, 11a, 11b) de courant,
dans lequel
chaque capteur (8a, 8b, 11a, 11b) de courant est conçu pour détecter le courant dans une phase de l'enroulement (3) statorique associé respectivement, dans lequel l'unité (10, 12, 13) d'exploitation est conçue pour, si le courant détecté respectivement dépasse une valeur de seuil fixée à l'avance, ouvrir l'interrupteur (5) d'alimentation de tronçon, les capteurs de courant comprenant des capteurs (8a, 8b) de courant d'alimentation, qui sont disposés au voisinage immédiat de l'interrupteur (5) d'alimentation de tronçon, le dispositif comprenant un interrupteur (7) de point neutre de tronçon au point (6) neutre de l'enroulement (3) statorique, chaque unité (10, 12, 13) d'exploitation étant intégrée dans un appareil de protection pour le réenclenchement rapide du tronçon de stator et/ou le contrôle de la résistance de court-circuit à la terre,
**caractérisé**
**en ce que** chaque capteur (8a, 8b, 11a, 11b) de courant est monté entre l'interrupteur (5) d'alimentation de tronçon et l'enroulement (3) statorique, les capteurs de courant comprenant des capteurs (11a, 11b) de courant de point neutre, qui sont montés à proximité immédiate du point (6) neutre de l'enroulement (3) statorique associé respectif, une première unité (10, 13) d'exploitation étant conçue pour déclencher l'interrupteur (5) d'alimentation de tronçon et une deuxième unité (12) d'exploitation étant conçue pour déclencher l'interrupteur (7) de point neutre du tronçon et la deuxième unité d'exploitation étant conçue pour déclencher l'interrupteur (5) d'alimentation de tronçon d'un tronçon (4) de commutation suivant.

2. Dispositif suivant la revendication 1,
**caractérisé en ce que**
la première unité (13) d'exploitation d'un tronçon (4) de commutation suivant est conçue pour déclencher l'interrupteur (7) de point neutre du tronçon (4) de commutation précédent.
